Europäisches Patentamt

European Patent Office

Office européen des brevets

(11) Numéro de publication : **0 480 816 A1**

# (12) DEMANDE DE BREVET EUROPEEN

(21) Numéro de dépôt : **91402679.4**

(22) Date de dépôt : **08.10.91**

(51) Int. Cl.$^5$ : **G01N 3/04**

(30) Priorité : **11.10.90 FR 9012543**

(43) Date de publication de la demande :
**15.04.92 Bulletin 92/16**

(84) Etats contractants désignés :
**BE CH DE ES FR GB IT LI**

(71) Demandeur : **SOCIETE NATIONALE
INDUSTRIELLE AEROSPATIALE Société dite:
37 Boulevard de Montmorency
F-75781 Paris Cedex 16 (FR)**

(72) Inventeur : **Fargeas, Franck
14, rue de Bordeaux
F-33980 Augenge (FR)**
Inventeur : **Reyrau, Daniel
17, rue de voltaire
F-33160 Saint Medard en Jalles (FR)**
Inventeur : **Cussac, Michel
Chemin de Menan
F-33260 La Teste (FR)**
Inventeur : **Bourely, Marcel
16, allée du château Lassale
F-33160 Saint Aubin de Medoc (FR)**

(74) Mandataire : **Lhuillier, René et al
ARMENGAUD JEUNE CABINET LEPEUDRY
52, avenue Daumesnil
F-75012 Paris (FR)**

(54) **Mors pour essais de traction sur des mèches éprouvettes sans talons.**

(57) Les garnitures (5) du mors (1) sont réalisées en matériau moulé à dureté et module de cisaillement évolutifs et épaisseur variable selon la hauteur du mors pour répartir les efforts de serrage sur cette hauteur, cette répartition des efforts étant complétée par une excentration du point d'application de la force de serrage (P).

Application aux essais de traction sur mèches éprouvettes en matériau composite.

FIG.1

EP 0 480 816 A1

L'invention qui se situe dans le domaine technique des dispositifs destinés à tester et évaluer les caractéristiques mécaniques des matériaux composites concerne plus particulièrement un mors spécial permettant de maintenir des mèches éprouvettes sans talons pour des essais de traction.

Les éprouvettes réalisées à partir de mèches de fibres imprégnées de matrices sont utilisées de façon diversifiée pour des essais en traction. Jusqu'à présent les essais de traction sont effectués par des machines de traction utilisant des mors de serrage commandés par exemple par un système pneumatique, hydraulique ou système autoserrant, sur des mèches éprouvettes avec talons dont la fabrication est longue et onéreuse. En effet, dans le cas de matrices résine, la fabrication de ces mèches s'effectue dans une machine d'imprégnation de résine à partir d'une bobine de fil sec par exemple en carbone, verre ou silice. Le taux d'imprégnation de la mèche peut être régulé par un système de poulies, la mèche est alors enroulée sur un mandrin et polymérisée à 60°C dans une étuve. Puis, quand la mèche est polymérisée, il faut coller des talons cartons ou métalliques destinés à éviter le glissement de la mèche au niveau des mâchoires de la machine. Il est apparent que le coût de fabrication de ces éprouvettes est élevé, la réalisation des talons représentant à elle seule une bonne part de ce coût. Hormis cet inconvénient, pour pouvoir tester l'éprouvette il faut attendre que la colle des talons soit sèche, ce qui peut retarder l'essai de 24 heures. D'autre part, cette technique ne permet plus de tester jusqu'à rupture les nouvelles fibres carbone de caractéristiques mécaniques améliorées.

C'est pourquoi on s'oriente maintenant vers la réalisation de mèches éprouvettes dépourvues de talon, ce qui diminue leur prix de revient, et permet de gagner du temps pour effectuer les essais.

Avec des mèches éprouvettes sans talons, on se heurte cependant à de nouvelles difficultés dues au fait qu'il faut évidemment éviter le glissement de la mèche dans les mors de serrage lors des essais en traction, surtout en ce qui concerne les mèches carbone avec lesquelles on atteint des contraintes à la rupture importantes.

Pour éviter ce glissement on sait utiliser un certain nombre de techniques. On connait par exemple des mors autoserrants coniques et striés utilisés sur des machines de traction courantes. Si le serrage à effet de coin augmente les efforts sur l'éprouvette lors de la traction, il n'élimine pas la concentration de l'effort en sortie de mors. Il convient entre autres à des éprouvettes métalliques. D'autre part ils agissent sur l'état de surface de l'éprouvette et créent des contraintes de serrage qui ne sont pas compatibles avec des mèches éprouvettes sans talon. On sait aussi utiliser la technique qui consiste à recouvrir les mors de serrage de papiers abrasifs évitant le glissement. Mais on a constaté que cela impliquait une usure rapide du papier abrasif et une grosse consommation de mèches du fait que bien souvent, le grain du papier est trop agressif pour les filaments des mèches et provoque leur rupture dans les mors. Il s'ensuit que pour obtenir une valeur avec un écart type faible il faut casser deux à trois fois plus de mèches lors des essais.

On connaît enfin une technique qui consiste à revêtir les mors de serrage par des élastomères. Cela présente l'avantage que la mèche n'est pas blessée lorsque les mâchoires du mors sont refermées, et surtout que les contraintes sont correctement réparties le long de la mèche. Ainsi lorsque les mors se referment sous l'effort de la pression de fermeture, l'élastomère emprisonne l'éprouvette et évite aussi le glissement. Néanmoins le niveau d'effort reste insuffisant dès lors qu'il s'agit de tester des mèches à très hautes résistances ou à forte section. On constate alors soit un glissement dans les mors, soit une rupture en cisaillement de l'élastomère, soit encore, lorsque la pression de serrage est augmentée, une rupture de la mèche au ras du mors. En effet l'effort de traction dans la mèche passe par des contraintes de cisaillement à l'interface entre les mors et la mèche dont le champ est fortement non-linéaire. On ne peut donc augmenter la longueur des mors ou leur force de serrage, car le problème n'en serait pas résolu pour autant, les ruptures se produisant toujours en sortie des mors. Pour éviter cela, on a alors pensé à utiliser des mors de serrage non coniques qui s'encastrent l'un dans l'autre et s'étendent sur une certaine hauteur pour pouvoir reprendre les efforts de traction par le cisaillement du matériau mou rapporté sur les mors. Mais dans ce cas l'opération de mise en place et de retrait de la mèche est longue et difficile; de plus le changement des revêtements internes des mors s'avère délicat et nécessite d'arrêter les essais pendant plusieurs jours. En résumé on voit que la rupture au ras des mors résulte de la superposition de plusieurs contraintes à savoir une contrainte de traction répartie dans la mèche, une contrainte de compression introduite par les mors et une contrainte de cisaillement résultant du mode d'introduction de l'effort.

L'invention vise donc à s'affranchir de tous ces inconvénients par le fait qu'elle propose des garnitures de mors pour machine de traction, pour essais avec des mèches-éprouvettes sans talon, dont la tenue mécanique permet de tester des mèches avec des contraintes à rupture très élevées et les rend ainsi applicables aux tests de mèches de plus forte section en matériaux à hautes caractéristiques par exemple utilisant des fibres de carbone. Ces nouveaux mors permettent l'introduction progressive d'efforts de cisaillement le long de l'interface mors/éprouvette, afin d'éviter de blesser la mèche ou de la rompre au ras des mors, tout en étant d'une mise en oeuvre aisée.

L'objet principal de la présente invention consiste donc en un mors pour essais de traction sur des mèches éprouvettes sans talon, comportant des garnitures, selon lequel les garnitures dudit mors sont réalisées en matériau moulé à dureté et module d'élasticité évolutifs et épaisseur variable selon la hauteur du mors pour répartir les efforts de serrage sur cette hauteur, cette répartition des efforts pouvant être complétée par une excentration du point d'application de la force de serrage.

Plus précisément les garnitures ont une épaisseur mesurée à une extrémité du mors du côté du bout de la mèche, qui est inférieure à son épaisseur mesurée à son extrémité opposée, et lesdites garnitures sont moulées sur des semelles profilées qui réalisent l'interface avec la base des mors et compensent l'épaisseur variable des garnitures.

Selon une autre caractéristique principale de l'invention, les garnitures sont réalisées en matériau non homogène sur toute leur hauteur pour que leur dureté et module d'élasticité soit plus importants dans la partie de plus faible épaisseur que dans la partie d'épaisseur plus large, et avantageusement le matériau des garnitures est réalisé en résine époxy chargée progressivement de poudre de pyrex d'une extrémité à l'autre.

L'invention a également pour objet un procédé pour réaliser les garnitures moulées à dureté évolutive du mors selon lequel on effectue la polymérisation de la résine et de sa charge qui constituent la garniture en inclinant le moule de fabrication pour provoquer par décantation une accumulation de charge modulée vers l'extrémité de la garniture.

Les caractéristiques particulières et avantages de l'invention ressortiront également de la description suivante d'une forme de réalisation, dans laquelle il est fait référence aux dessins annexés qui représentent :

figure 1, une vue schématique en coupe d'un mors de serrage d'une mèche-éprouvette sans talon

figure 2, une courbe montrant l'évolution de l'effort de pression.

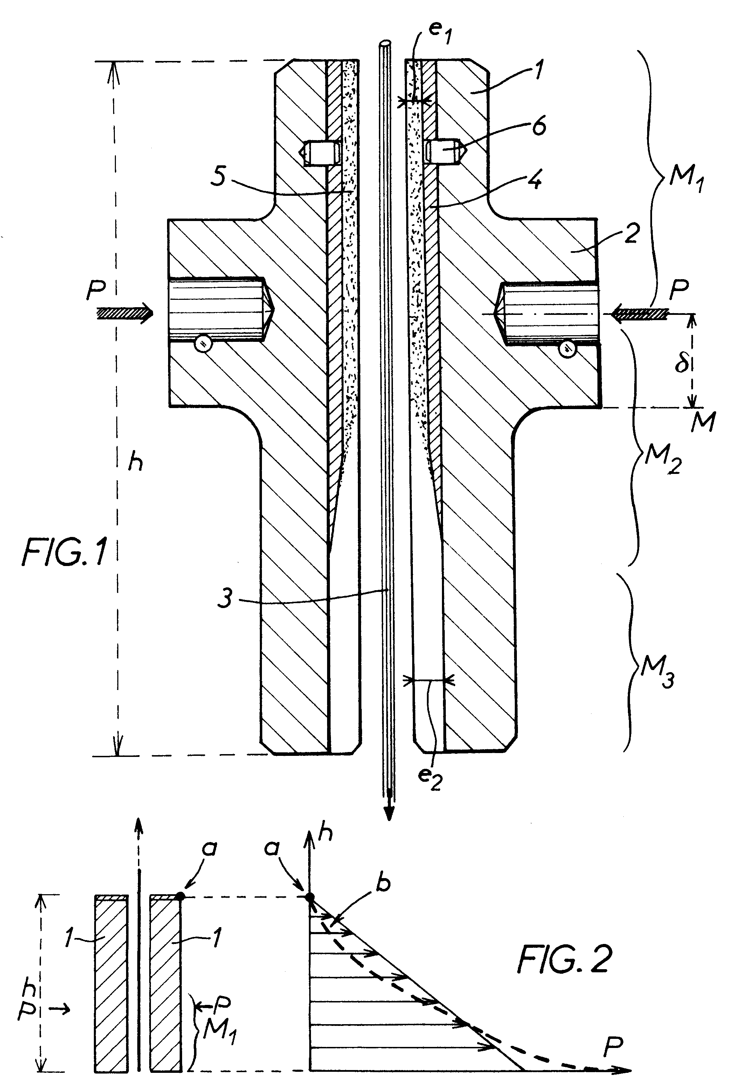

Le mors de serrage 1 utilisé présente la structure générale illustrée à la figure 1. Il s'étend sur une hauteur h de part et d'autre d'un axe horizontal médian M. Chacune des deux parties latérales du mors est soumise à un effort de serrage P qui s'exerce non pas en son milieu mais sur des talons 2 qui sont excentrés d'une valeur δ par rapport à l'axe M. L'effort de pression s'applique donc sur une mèche centrale 3, de façon plus importante vers l'extrémité libre supérieure de la mèche que de l'autre côté. Le mors est équipé de pions 6 pour la fixation interne d'une semelle 4 portant des garnitures 5. On constate sur la figure que les garnitures ont un profil particulier non régulier. En effet leur épaisseur $e_1$ mesurée en partie haute du mors est beaucoup plus faible que l'épaisseur $e_2$ mesurée à la base. Cette partie haute du mors où est

mesurée l'épaisseur $e_1$ correspond à la partie qui enserre le bout de la mèche 3, tandis que la partie basse correspond à l'autre extrémité du mors d'où sort la mèche en direction du mors opposé. Les garnitures 5 sont avantageusement directement moulées sur les semelles 4 par exemple en aluminium qui ont pour objet de réaliser l'interface avec la base des mors mais aussi de compenser l'épaisseur variable des garnitures. Les semelles sont donc effilées et ont un profil évasé dont les avantages seront indiqués plus loin. Les garnitures 5 sont maintenues sur les semelles et les mors en position verticale, lorsque les mors sont ouverts, par un adhésif double face. Les pions 6 permettent de positionner les mâchoires dans les mors de serrage, ce qui favorise un changement rapide et de qualité des garnitures.

Lesdites garnitures 5 ont donc une épaisseur variable, mais sont aussi réalisées en matériau non homogène sur toute leur hauteur, c'est-à-dire que le matériau constitutif est plus chargé dans la partie plus haute de plus faible épaisseur comme l'illustrent les petits points visibles à la figure 1. Ainsi le matériau des garnitures est-il réalisé par exemple en résine époxy chargée progressivement de poudre de pyrex d'une extrémité à l'autre. La dureté de la garniture est donc plus importante dans la partie de faible épaisseur $e_1$ que dans la partie d'épaisseur plus large $e_2$. On effectue la polymérisation de la garniture, c'est-à-dire la résine plus sa charge, en inclinant d'environ 12° le moule de fabrication ce qui a pour conséquence de provoquer par décantation une accumulation de charge modulée vers l'extrémité de la garniture. Cette inclinaison idéale de 12° permet d'obtenir une évolution tangentielle entre la partie chargée à dureté plus élevée et la partie non chargée à dureté plus faible, et autorise la migration de la poudre de pyrex vers le fond du moule dans la résine.

On relève que le mors de serrage préalablement décrit utilise donc une garniture moulée d'épaisseur variable (évoluant de $e_1$ à $e_2$) et qui présente une dureté et un module d'élasticité évolutifs entre sa partie épaisse et la partie la plus mince. En outre il y a une excentration du point d'application P de la force de serrage sur le mors.

Il y a donc de ce fait une évolution de la force de serrage le long de la mâchoire du mors, constituée comme on sait de la garniture 5 et de la semelle 4.

Dans la zone supérieure $M_1$, c'est-à-dire la zone où la garniture 5 est chargée et où l'application de la force P est la plus importante du fait de son excentration, sera assuré un serrage très important de la mèche 3, qui permettra d'exercer sur celle-ci un effort de traction également très important dans le sens marqué par la flèche et d'introduire une part importante de l'effort de cisaillement dans une zone de l'éprouvette, pour la solliciter en traction. L'éventuelle détérioration de la mèche dans sa partie d'extrémité supérieure ne présente pas un inconvénient particulier. Dans la zone intermédiaire $M_2$, l'évasement de la garniture vers une zone plus épaisse et de dureté plus faible va autoriser une certaine déformation sous l'effort, et permettre à ladite garniture "d'épouser" la mèche et d'augmenter la surface de contact. Au lieu d'un point de serrage ponctuel, on a obtenu par évasement un point de serrage tangentiel et une répartition des efforts de serrage le long de la mèche, cette répartition évoluant de manière croissante.

Enfin la zone inférieure $M_3$ de la garniture est souple pour ne pas blesser l'éprouvette-mèche et éviter une rupture de la mèche au ras des mors, à un niveau où celle-ci est déjà très sollicitée et où toute surcontrainte engendrerait une rupture. Il ne faut pas que cette zone de rupture se situe dans les mors ni au ras des mors, cela pour s'affranchir de l'incertitude liée aux perturbations du serrage, le serrage donnant un champ de contraintes non homogène. Le module de cisaillement du matériau de la garniture étant plus élevé dans la partie mince de la mâchoire (zone $M_1$) que dans la partie épaisse, la déformation en cisaillement des mâchoires est plus faible vers la partie libre de la mèche, ce qui contribue à charger davantage l'extrémité de la mèche.

Cette évolution de la force de serrage le long de la mâchoire du mors, c'est-à-dire sa garniture et la semelle, est illustrée à la figure 2. On y voit schématisés les mors 1 de hauteur h soumis à l'application des forces de serrage P. On voit sur la courbe voisine que l'effort de pression est plus important dans la zone $M_1$ du côté de l'extrémité de la mèche, c'est-à-dire à l'endroit ou la contrainte de traction est la plus faible. Cette représentation théorique met en évidence le point singulier a correspondant à la zone ou la mèche casse. On a donc atténué, voire supprimé l'effort ponctuel au point a sur la mèche par un évasement b de la courbe auquel correspond un serrage tangentiel de la mèche comme on l'a indiqué plus haut.

Le mors ainsi décrit est donc "évolutif" puisqu'il y a selon sa hauteur, une évolution de la force de serrage, une évolution de l'épaisseur de la garniture et une évolution du module de cisaillement de l'interface.

**Revendications**

1.- Mors pour essais de traction sur des mèches éprouvettes sans talon, comportant des garnitures dont le matériau présente une épaisseur variable selon la hauteur du mors, caractérisé en ce que les garnitures (5) dudit mors (1) présentent également une dureté et un module d'élasticité évolutifs selon la hauteur (h) du mors pour répartir les efforts de serrage sur cette hauteur et en ce que cette répartition des efforts peut être complétée par une excentration du point d'application de la force de serrage (P).

2.- Mors selon la revendication 1, caractérisé en ce que les garnitures (5) sont moulées sur des semelles (4) profilées qui réalisent l'interface avec la base des mors et compensent l'épaisseur variable des garnitures.

3.- Mors selon la revendication 1, caractérisé en ce que les garniture (5) sont maintenues sur les semelles et les mors par un adhésif double face.

4.- Mors selon la revendication 1, caractérisé en ce que des pions (6) sont prévus pour la fixation des semelles (4) sur les parois internes des mors (1).

5.- Mors selon la revendication 1, caractérisé en ce que les garnitures (5) sont réalisées en matériau non homogène sur toute leur hauteur pour que leur dureté et leur module d'élasticité soient plus importants dans la partie de plus faible épaisseur $(e_1)$ que dans la partie d'épaisseur plus large $(e_2)$.

6.- Mors selon la revendication 5, caractérisé en ce que le matériau des garnitures (5) est réalisé en résine époxy chargée davantage de poudre de pyrex dans la partie plus haute de faible épaisseur, que dans la partie basse.

7.- Mors selon la revendication 1, caractérisé en ce que la force de serrage (P) des mors s'exerce, par rapport à un axe horizontal médian (M), de façon excentrée et plus importante, du côté de l'extrémité libre de la mèche (3).

8.- Mors selon les revendications 1, 2 et 7, caractérisé en ce que dans, la zone intermédiaire $(M_2)$ du mors les garnitures (5) sont évasées entre les zones $(e_1)$ d'épaisseur plus faible et $(e_2)$ d'épaisseur plus forte, pour augmenter la surface de contact et pour que la répartition des efforts le long de la mèche, évolue de manière croissante.

9.- Procédé pour réaliser les garnitures moulées à dureté évolutive du mors selon la revendication 1, caractérisé en ce qu'on effectue la polymérisation de la résine et de sa charge qui constituent la garniture en inclinant d'environ 12° le moule de fabrication pour provoquer par décantation une accumulation de charge vers l'extrémité de la garniture.

FIG.1

FIG.2

Office européen
des brevets

**RAPPORT DE RECHERCHE EUROPEENNE**

Numero de la demande

EP 91 40 2679

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-8 529 717 (BAYER) | 1,2 | G01N3/04 |
| A | * page 5, ligne 16 - ligne 32; revendications; figures 1,2 * | 6-8 | |
| | --- | | |
| Y | SOVIET INVENTIONS ILLUSTRATED Week C13, 7 Mai 1980 Derwent Publications Ltd., London, GB; Page 11, AN C9153C/13 & SU-A-675 344 (CENT PLN DES TECHN) 25 Juillet 1979 * abrégé * | 1,2 | |
| | --- | | |
| A | DE-B-1 139 302 (ZWICK) * colonne 3, ligne 45 - colonne 4, ligne 16 * | 1,5 | |
| | ----- | | |

**DOMAINES TECHNIQUES RECHERCHES (Int. Cl.5)**

G01N

Le présent rapport a été établi pour toutes les revendications

| Lieu de la recherche | Date d'achèvement de la recherche | Examinateur |
|---|---|---|
| LA HAYE | 20 DECEMBRE 1991 | MILLS J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    ..........................................................
& : membre de la même famille, document correspondant

EPO FORM 1503 03.82 (P0402)